# EUROPEAN PATENT APPLICATION

(11) **EP 4 641 506 A1**
(43) Date of publication of application: **29.10.2025**
(21) Application number: 24171692.7
(22) Date of filing: 22.04.2024
(51) Int. Cl.: G06T 11/20

(54) **LINE RENDERING FOR WAVEFORMS**

(71) Applicant: Koninklijke Philips N.V., 5656 AG Eindhoven (NL)
(72) Inventor: TAMM, Georg, 5656 AG Eindhoven (NL); TESSEL, Uli, 5656 AG Eindhoven (NL)
(74) Representative: Philips Intellectual Property & Standards

(57) **Abstract**

The present invention relates to a computer-implemented method of rendering a line at variable thickness and displaying the line on a display unit comprising a horizontal X-axis and a vertical Y-axis. The method comprises receiving at least a first pair of points and a second pair of points, the first pair of points and the second pair of points defining a line segment of the line intersecting a vertical column of pixels, the column of pixels comprising a plurality of pixels, wherein the first pair of points comprises a first upper point and a first lower point in respect to the direction of the Y-axis, and the second pair of points comprises a second upper point and a second lower point in respect to the direction of the Y-axis, wherein the first upper point and the second upper point define an upper edge of the line segment intersecting the column of pixels, and wherein the first lower point and the second lower point define a lower edge of the line segment intersecting the column of pixels. The method comprises further, for at least one pixel in the plurality of pixels of the column of pixels, determining an area coverage of the respective pixel by the line segment based on the upper edge and the lower edge of the line segment, and assigning a coloring to the respective pixel based on the determined area coverage. As coloring, also shading of the pixel on a greyscale can be understood. The method comprises further displaying the line segment at the display unit according to the assigned coloring of the respective pixel.

## Description

### FIELD OF THE INVENTION

The present invention relates to a computer-implemented method of rendering a line at variable line thickness and displaying the line on a display unit, a data processing apparatus, and a computer program.

### BACKGROUND OF THE INVENTION

Anti-aliased line drawing at variable line thickness is a common graphical task that has been implemented in native applications and browsers, via CPU and with GPU-acceleration. Wave drawing is one of the most essential and characteristic features of a patient monitoring system, conveying important medical information to the user. In essence, waves are visually a form of lines, but with certain attributes that make them a special line type. As they update progressively and continuously from sample data generated at the patient side, the screen usually shows the most recent portion of a wave, with new parts being added often in real-time. This is important because it makes waves animated content, which imposes strong requirements to uphold a steady performance for visually adequate results. A further requirement is that the drawing must clearly and deterministically show dropouts in the data, via holes in the waves. While a plethora of solutions for general line drawing applications exist, these solutions are less suitable in the particular case of drawing medical waveforms, especially considering the lower-end embedded hardware commonly in use in a patient monitoring system.

Existing line drawing methods usually focus on rendering a specific line that is static and predefined. Interconnecting separate line segments is not straight forward and can lead to visual artifacts using these methods due to the overlap and blending that occurs. Conversely, this means that while animated line rendering is possible using these methods, it essentially requires redrawing the entire line each time a potentially only small part is added, which may not be feasible depending on the wave count and size and the target devices' capabilities.

### SUMMARY OF THE INVENTION

The inventors of the present invention have developed a method that enables chaining separate line segments together, thus enabling progressive rendering perfectly fitting the most common wave use case.

It is an object of the present invention to provide an improved method of rendering a line at variable line thickness that enables to maintain high performance and quality at comparatively low resource usage and in turn power consumption, which can directly save operating cost and improve product lifetime and customer satisfaction. In particular for waves, being able to change the line thickness is important to ensure the waves and the medical information they convey remain adequately visible and interpretable to a clinician under variable conditions such as viewing distance or environmental lighting.

The object of the present invention is solved by the subject matter of the independent claims, wherein further embodiments are incorporated in the dependent claims.

The described embodiments pertain to a computer-implemented method of rendering a line at variable line thickness and displaying the line on a display unit, a data processing apparatus, and a computer program. The embodiments described further may be combined in any possible way. Synergistic effects may arise from different combinations in various ways of the embodiments described further although these combinations might not be described explicitly in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

According to a first aspect of the invention, there is provided a computer-implemented method of rendering a line at variable line thickness and displaying the line on a display unit comprising a horizontal X-axis and a vertical Y-axis. The method comprises receiving at least a first pair of points and a second pair of points, e.g., from a vital sign measurement device, the first pair of points and the second pair of points defining a line segment of the line intersecting a vertical column of pixels, the column of pixels comprising a plurality of pixels, wherein the first pair of points comprises a first upper point and a first lower point in respect to the direction of the Y-axis, and the second pair of points comprises a second upper point and a second lower point in respect to the direction of the Y-axis, wherein the first upper point and the second upper point define an upper edge of the line segment intersecting the column of pixels, and wherein the first lower point and the second lower point define a lower edge of the line segment intersecting the column of pixels. The method comprises further, for at least one pixel in the plurality of pixels of the column of pixels, determining an area coverage of the respective pixel by the line segment based on the upper edge and the lower edge of the line segment, and assigning a coloring to the respective pixel based on the determined area coverage. As coloring, also shading of the pixel on a greyscale can be understood. The method comprises further displaying the line segment at the display unit according to the assigned coloring of the respective pixel.

Thus, a line rendering method tuned for the wave use case is proposed, that, while less generic than other methods, brings advantages for the wave use case, most notably by providing improved performance on essentially any device.

The method comes with major advantages in terms of performance and applicability compared to other approaches, e.g., such as provided via the browser's SVG (Scalable Vector Graphics) or canvas 2D API, which is especially significant given the importance of wave drawing as an essential medical feature on usually resource-limited and in some cases even GPU-less target devices. The approach can also be useful for other line drawing applications beyond waves. In its core, the proposed method enables to render the individual segments of a wave largely independent from each other in a SIMD (Single Instruction, Multiple Data) fashion while providing smooth anti-aliasing via a fast approximation, a process that is suitable for hardware-acceleration. The presented progressive wave drawing performs exceptionally well even on low-end hardware such as embedded systems.

The display unit may be a display of a medical device, e.g., a patient monitor or an electrocardiograph. The line or the line segment may visualize health information, e.g. vital signs of a patient like an electrocardiogram, blood pressure, or oxygen saturation. The first pair of points and the second pair of points defining the line segment can be directly received from a sensor or a measurement device measuring the vital signs of the patient. Also, a filtering unit or filtering algorithm may sit in-between the sensor or a measurement device and the presented line rendering method. The filtering generates the pairs of points according to the raw data of the measurement source, in the process considering parameters like the line thickness or the value range of the measurement data. Generally, the pairs of points may come from any conceivable source including sources beyond a medical application.

Rendering the waveforms may involve two main steps. As first step, the filtering process may be applied, which usually takes the generated measurement samples of a patient's vital signs and transforms them into a representation optimized for drawing. The filtering step most notably involves resolving the wave thickness, which advantageously enables the later drawing to operate independently of it. Thus, filtering can be seen as a pre-process to the drawing. While the inventors of the present invention have developed several algorithms to perform the filtering step, all suitable for parallelization and vectorization on any CPU system, filtering is not in the focus of the present invention and is not detailed further apart from the input data it generates for the drawing.

A second step is the drawing method. The method separates a wave into vertical columns of pixels that the wave goes through. In contrast, other methods may often operate on horizontal segments or scanlines. Mapping a vertical pattern directly to memory accesses can be particularly beneficial on GPU architectures with tiled memory layouts. For each column of pixels, the input data from the filtering step allows to determine the wave geometry within the column. Given the geometry, a fast approximation of the overlap area of the wave with the top- and bottommost pixel of a column of pixels is performed, using a simplified function that approximates the actual area function for continuous pixel positions. By interpolation, the overlap area for the remaining pixels in a column of pixels can be determined, and each pixel can finally be colored according to its overlap area with the wave segment to be drawn for smooth anti-aliasing.

Advantageously, the entire drawing step is suitable for parallelization and hardware-acceleration, either via a GPU or even a dedicated FPGA (Field Programmable Gate Array). Due to the largely independency of the individual vertical columns of pixels, the method can generate pixels for columns in any order and progressively over several steps, which enables the method to be feasible even without hardware-acceleration on essentially any CPU system. A particular most advanced implementation though may utilize a modem parallelized and GPU-enabled graphics pipeline that gives explicit control over the rendering buffers. The method may incrementally keep each buffer in a multi-buffered setup up to date with minimal work and thus can achieve an exceptionally high throughput and performance, including on devices relevant for productization like the iMX 6 and the iMX 8M Plus.

Further, a fast and novel anti-aliasing computation may be employed, which enables to quickly even fully redraw a preprocessed wave anywhere on screen, especially by using GPU acceleration. Anti-aliasing results in waveforms that are more pleasant for the eye on the display, notably avoiding stuttering effects as waves move across the screen, which is especially desirable considering that waves are often persistently visible on a patient monitor. Rendering dropouts in the patient data at a reliable and deterministic size is a safety critical function, and other methods may fail to support this inherently due to the way they handle the line thickness, thus requiring a secondary mechanism such as clipping to achieve the effect, further inducing performance overhead. The proposed method inherently shows holes in the waves of deterministic size independent of the wave thickness.

In summary, the proposed method has several key attributes that makes it a decisive fit for safety-critical medical wave drawing, enabling to maintain high performance and quality at comparatively low resource usage and in turn power consumption, which can directly save operating cost and improve product lifetime and customer satisfaction. In addition, the proposed method provides straight-forward support for filled and cascading waves, which are special types of waves, whereas other methods may again require additional mechanisms to achieve a similar outcome.

In an embodiment of the invention, determining the area coverage of the respective pixel by the line segment is simplified by determining a first area of the pixel below the upper edge and a second area of the pixel below the lower edge, and subtracting the second area from the first area, thereby determining the area coverage.

In an embodiment of the invention, determining the first area of the pixel below the upper edge is sped up by sampling a first area function mapping a pixel position varying at sub-pixel accuracy within the column of pixels to a respective approximated area below the upper edge, and/or determining the second area of the pixel below the lower edge is sped up by sampling a second area function mapping a pixel position varying at sub-pixel accuracy within the column of pixels to a respective approximated area below the lower edge. An area function may be a composite function.

In an embodiment of the invention, the first area function and/or the second area function correlating the pixel position within the column of pixels to the respective area below the upper edge and/or the lower edge, respectively, is a simple and thus fast to evaluate linear function clamped between zero and at most the full area of a pixel. E.g., if the line segment passes through the entire vertical column of pixels and the pixel size is normalized, the function may take values from 0 to 1. Likewise, if the line segment only intersects half of the column of pixels, the function may take values from 0 to 0.5.

In an embodiment of the invention, the method is performed for each pixel of the plurality of pixels that is intersected by the line segment.

In an embodiment of the invention, the method is performed for a topmost pixel and a bottommost pixel of the plurality of pixels that are intersected by the line segment, and the first area of the pixel below the upper edge and/or the second area of the pixel below the lower edge for the pixels of the plurality of pixels that are located in-between the topmost pixel and the bottommost pixel are determined by interpolation.

Thus, given the area approximation via a linear function and evaluating the function before clamping, a signed area of the topmost pixel below the upper edge is determined, and a signed area of the bottommost pixel below the upper edge is determined. Given the linear behavior of the signed area below the upper edge between the topmost pixel and the bottommost pixel, the signed area of the pixels in-between the topmost pixel and the bottommost pixel can be linearly interpolated. Clamping of the area is performed after the interpolation. The corresponding steps are performed for the lower edge. Subtracting the area below the lower edge from the area below the upper edge for each pixel intersected by the line segment results in the area coverage of each pixel.

In an embodiment of the invention, determining the area coverage of the pixel is simplified by setting the area coverage to at most the area of a pixel if the pixel is both fully below the upper edge and fully above the lower edge. E.g., if the line segment passes through the entire vertical column of pixels and the pixel size is normalized, the coverage may be 1. Likewise, if the line segment only intersects half of the column of pixels, the coverage may be 0.5.

In an embodiment of the invention, the method comprises further receiving a third pair of points, wherein the second pair of points is located within the column of pixels, the first pair of points is located previous to the column of pixels, and the third pair of points is located subsequent to the column of pixels, wherein the second pair of points and the third pair of points define a second line segment intersecting the vertical column of pixels. Determining an area coverage of the pixel comprises determining a first sub-pixel area coverage of the pixel for the first line segment and a second sub-pixel area coverage of the pixel for the second line segment, and incorporating the determined first and second sub-pixel area coverages into the area coverage of the pixel proportionally to the sub-pixel location of the second pair of points within the vertical column of pixels. Hence, uniformly shifting the location of the pairs of points enables to move the line at sub-pixel accuracy.

In an embodiment of the invention, a plurality of pairs of points is received within a column of pixels, and each resulting line segment within the column of pixels or intersecting the column of pixels contributes proportionally to the area coverage of the pixel.

In an embodiment of the invention, the line intersects a plurality of vertical columns of pixels, and the method is repeated for every column of pixels of the plurality of columns of pixels, hence a multi-faceted line can emerge.

In an embodiment of the invention, drawing the plurality of columns of pixels or the individual pixels within each column of pixels is performed on a step-by-step basis across several iterations. For this purpose, the method comprises buffering the columns of pixels with the coloring assigned to each pixel in a buffer, and the buffer is reused in each iteration and is updated with line segments corresponding to columns of pixels that are seamlessly integrated with line segments corresponding to columns of pixels that are already in the buffer, thus progressively advancing the line intersecting the plurality of columns of pixels, e.g., according to incoming live measurement data. The frequency of iterations may be dictated by a display engine, such as 60 iterations or frames per second.

In an embodiment of the invention, a plurality of buffers is used, and the method further comprises for each buffer of the plurality of buffers, tracking the vertical columns of pixels buffered to any other one of the plurality of buffers since the respective buffer was last used, for each iteration, bringing the current buffer used in this iteration up to date by drawing the columns of pixels tracked for that buffer, and for each iteration, updating the current buffer with new columns of pixels if new columns of pixels exist for the current iteration.

In an embodiment of the invention, the method comprises adding a dynamically changing offset value to the X- and/or the Y-axis placement of received pairs of input points, thereby moving the rendered line at sub-pixel accuracy.

In an embodiment of the invention, the input points of the lower edge, i.e., the first lower point and the second lower point, are a predefined threshold to fill an area below the line segment, or the input points of the upper edge, i.e., the first upper point and the second upper point, are a predefined threshold to fill an area above the line segment. Visualizing the area under a wave can be a relevant medical indicator, e.g., for capnography waveforms.

In an embodiment of the invention, the method is generalized by generating the input points according to any convex geometric shape as well as according to concave shapes for which in respect to the direction of the Y-axis, no lines exist that intersect the shape boundary at more than two points, thus unlocking substantial further variation in the types of visualizations the method can generate.

In an embodiment of the invention, the method comprises detecting missing or invalid input points for a column of pixels, and assigning a predefined coloring to the pixels of the respective columns of pixels. Thus, if pairs of received points are invalid, such points can result in rendering holes in the drawn line exactly the size of two or more pixels , independent of the line thickness. In this case, if one input point is missing or invalid, the respective column of pixels and a preceding or subsequent column of pixels using this input point for rendering may be assigned with the predefined coloring, or may be simply drawn as hole in the rendered line.

According to another aspect of the invention, there is provided a data processing apparatus for carrying out the steps of the method according to any one of the preceding embodiments.

In an embodiment of the invention, a capable hardware such as a GPU performs the interpolation, and/ or a dedicated hardware such as an FPGA approximates the area below the line edges for a pixel.

According to another aspect of the invention, there is provided a computer program comprising instructions which, when the program is executed by a computer, cause the computer to carry out the steps of the method according to any one of the preceding embodiments.

According to another aspect of the invention, there is provided a computer-readable storage medium comprising instructions which, when executed by a computer, cause the computer to carry out the steps of the method according to any one of the preceding embodiments.

Thus, the benefits provided by any of the above aspects equally apply to all of the other aspects and vice versa.

In summary, the invention relates to a computer-implemented method of rendering a line at variable line thickness and displaying the line on a display unit comprising a horizontal X-axis and a vertical Y-axis. The method comprises receiving at least a first pair of points and a second pair of points that define a line segment of the line intersecting a vertical a column of pixels comprising a plurality of pixels, wherein the first pair of points comprises a first upper point and a first lower point in respect to the direction of the Y-axis, and the second pair of points comprises a second upper point and a second lower point in respect to the direction of the Y-axis, wherein the first upper point and the second upper point define an upper edge of the line segment intersecting the column of pixels, and wherein the first lower point and the second lower point define a lower edge of the line segment intersecting the column of pixels. For at least one pixel in the plurality of pixels of the column of pixels, the method comprises determining an area coverage of the respective pixel by the line segment based on the upper edge and the lower edge of the line segment, and assigning a coloring to the respective pixel based on the determined area coverage. As coloring, also shading of the pixel on a greyscale can be understood. The method comprises further displaying the line segment at the display unit according to the assigned coloring of the respective pixel.

One of the advantages of embodiments of the present invention is that rendering of the individual segments of a wave largely independent from each other is enabled while providing smooth anti-aliasing via a fast approximation, a process that is suitable for hardware-acceleration. The progressive wave drawing performs exceptionally well even on low-end hardware such as certain embedded systems. High performance and quality at comparatively low resource usage and in turn power consumption is enabled, which can directly save operating cost and improve product lifetime and customer satisfaction.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a plurality of rendered waves.
Fig. 2 shows a line with a single segment intersecting a vertical column of pixels.
Fig. 3A shows a detailed view of a pixel intersected by an upper edge of a line segment.
Fig. 3B shows an area function plus a linear approximation of that function, both mapping a pixel position within the column of pixels to a respective area below an edge of the line segment.
Fig. 4 shows a vertical column of pixels intersected by a line segment, with the area coverage for the pixels in-between the topmost and the bottommost pixel being determined by interpolation.
Fig. 5A shows a detailed view of another pixel intersected by an upper edge of a line segment.
Fig. 5B shows an area function plus a linear approximation with offset of that function, both mapping a pixel position within the column of pixels to a respective area below an edge of the line segment.
Fig. 6 shows an illustration how a set of rendering buffers is incrementally kept up to date.
Fig. 7 shows a set of measurements showcasing the performance of the method according to the invention.
Fig. 8 shows a line with two segments intersecting a vertical column of pixels.
Fig. 9A and 9B show examples of rendered filled waves and cascading waves.
Fig. 10 shows a block diagram of a method of rendering a line at variable line thickness and displaying the line on a display unit comprising a horizontal X-axis and a vertical Y-axis according to an embodiment of the invention.
Fig. 11 shows a block diagram of a method of rendering a line at variable line thickness and displaying the line on a display unit comprising a horizontal X-axis and a vertical Y-axis according to another embodiment of the invention.

### DETAILED DESCRIPTION OF EMBODIMENTS

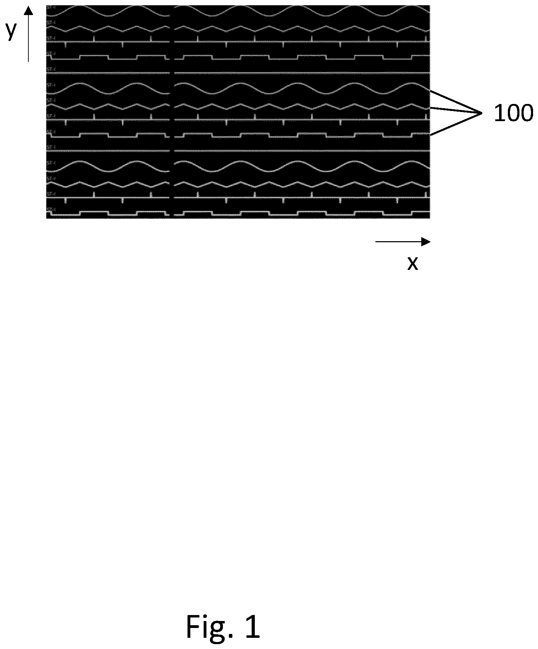

Fig. 1 shows a plurality of lines 100 as rendered waves. Waves are a special form of lines 100, and the method of the present invention is specifically designed for this use case. Waves usually update continuously according to small data chunks that arrive in real-time, with the screen showing the most recent portion of a wave. They usually go horizontally from left to right within a rectangular area called the channel, with the already rendered part being static and the new part being added. Once the newest part reaches the right channel border, it may wrap to the left again, essentially replacing old with new data. Between the newest and the oldest part, there may be an empty area called the eraser. There may be medically relevant dropouts in the data, and it is important that they as well as the eraser appear clearly as holes of deterministic size on the screen as shown in Fig. 1.

Waves have no loops or line parts that stack below or above each other. Further, repeatedly changing parameters such as speed, thickness, or scale, e.g., according to user input, is no common use case. These parameters may change occasionally though. There are special types of waves: cascading waves that appear in several segments on the screen and thus generally show a larger time frame of a wave; and filled waves that have the area below the wave colored up to a boundary, which is usually the channel border. Finally, there may be a multitude of waves on screen at the same time, and performance scalability is thus especially important.

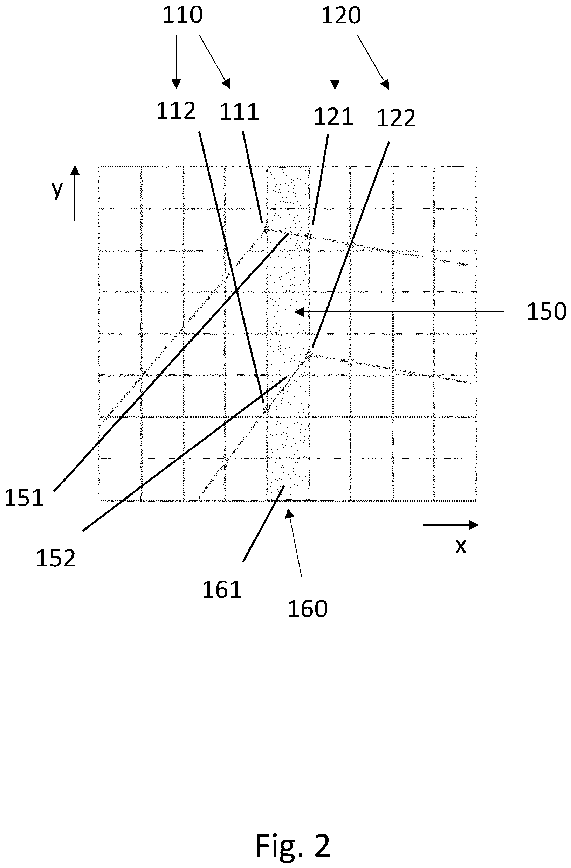

Fig. 2 shows a line segment 150 comprising an upper edge 151 and a lower edge 152 intersecting a vertical column of pixels 160. The pixels 161 of the vertical column of pixels 160 are arranged on top of each other in respect to the direction of the Y-axis, such that every pixel 161 of the vertical column of pixels 160 has the same position on the X-axis. A filtering procedure may be performed before rendering of the wave, which operates on the measurement data to generate the input for the drawing method. Alternatively, data sources may directly generate the input for the drawing. For each vertical column of pixels 160 a wave or the currently processed part of it passes through horizontally on the X-axis as line segment 150, the filtering generates at least a pair of positional values on the Y-axis, in a main use case by mapping time-stamped measurement samples to pixel positions considering a line thickness as well as wave speed and scale, but generally potentially according to any raw input. One position represents the Y coordinate of a first upper point 111 that the upper edge 151 of the wave geometry passes through, and one first lower point 112 the coordinate for the lower edge 152. X-axis wise, these positions are placed at the right border of the corresponding vertical column of pixels. Fig. 2 illustrates an exemplary filtering output for a wave part intersecting a column of pixels 160 with the dots illustrating the positional output of the filtering step. The line segment 150 enters the column of pixels 160 at the first pair of points 110 comprising the first upper point 111 and the first lower point 112, and leaves the column of pixels 160 at the second pair of points 120 comprising the second upper point 121 and the second lower point 122. The first upper point 111 and the second upper point 121 are connected by the upper edge 151 of the line segment 150, and the first lower point 112 and the second lower point 12 are connected by the lower edge 152 of the line segment 150.

Thus, a convenient array format as the input for the drawing step is provided. If the drawing runs on a GPU, using a texture to store the data for one or multiple waves is a recommended choice to be utilized on OpenGL ES platforms. Depending on the portion of a wave part that is to be redrawn at any one time, an array of adequate size can be allocated and used as a ring buffer.

While incoming measurement samples can affect previous and also following columns of pixels depending on the line thickness, this overlap is small in all common and reasonable use cases. Consequently, the filtering is a progressive process that induces low overhead per iteration given the usually small incremental updates. Parallelization enables further speed up. Given a set of samples that affect multiple columns of pixels, each column can be processed independently of the other columns.

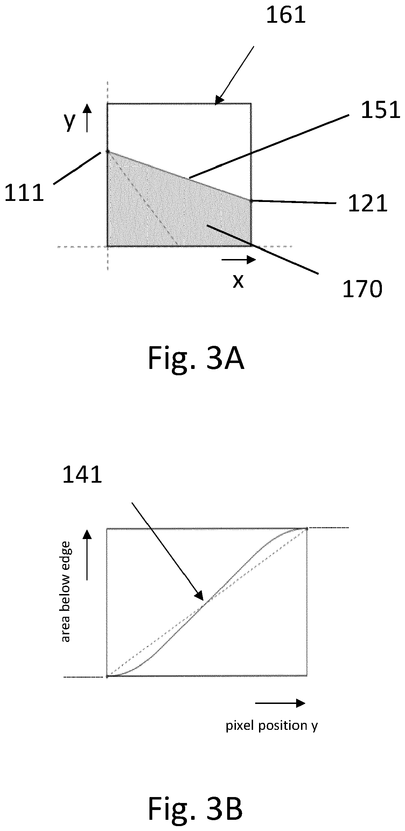

Fig. 3A shows a detailed view of a pixel 161 intersected by an upper edge 151 of a line segment 150 between a first upper point 111 and a second upper point 121. The solid line depicts a wave edge going through a vertical column of pixels 160. Thus, the grey shaded area of this pixel is the covered area, and corresponds to an area coverage of about 50% in this example. In the following, it is illustrated how a single vertical column of pixels 160 according to the corresponding entries in the input ring buffer is drawn. Each vertical column of pixels is pixel-aligned on the X-axis, and can thus be simply assigned with an integer coordinate that determines where the data for that column resides in the input buffer. The method looks up the positional Y-axis entries for both the column of pixels to draw and its predecessor to determine the wave line geometry that passes through the column. The upper edge 151 of the wave is defined by connecting the respective upper points of the two columns of pixels and the lower edge 152 in the same way using the two lower points. Also, the topmost and bottommost pixel that are part of the wave can be derived.

To render the column of pixels with proper anti-aliasing, the overlap area of the wave geometry with each pixel of the column between and including the top and the bottom pixels needs to be determined. In other words, the percentage that the wave covers of the overall area of a pixel is computed to shade the pixel. The direct and accurate method to obtain the overlap area is via integration. To improve performance, a devised method may be used instead that provides a fast approximate result. Mathematically, this process can be broken down to computing the area below a line within a rectangle. In this case, the line is fixed, but multiple rectangle positions are given, one for each pixel. If starting with any pixel position atop one of the upper edge or the lower edge, and the pixel is continuously moved down the Y-axis while calculating the area of the pixel below the line, a graph such as shown as solid line 141 in Fig. 3B is derived, which changes with the slope of the line segment.

A function with two exponential sections that are mirrors of each other can be seen. A key observation is that this function can be approximated with another line, which is depicted in Fig. 3B as dashed line 141. Given a wave edge, the origin of the line is the upper point of the wave edge. The line intersects the opposite pixel border at the lower point minus 1 in normalized pixel height. From the difference between these two points, the slope can be computed, which is perfectly stable since the difference is always greater than zero even for an horizontal edge, and vertical edges can by definition not occur. This line can now be sampled according to the actual fixed pixel positions, using the offset from the line origin to the bottom border of the pixel as the sampling position, to approximate the signed area under an edge for each pixel. The proposed method performs this step for both wave edges, clamps the results between 0 and 1 in normalized space, and finally determines the overlap of the wave geometry with a pixel by subtracting the area below the bottom edge from the one below the top edge. The linear function needs to be clamped between 0 and 1, in order to ensure that the covered area of the pixel cannot take negative values or values larger than the normalized area of the pixel. This is shown with the dashed graph depicted in Fig. 3B. Clamping is indicated with the horizontal dashed lines at the left- and the righthand side. The dashed line of both Figs. 3A and 3B is the line that is sampled to approximate the area below the edge for a pixel 161.

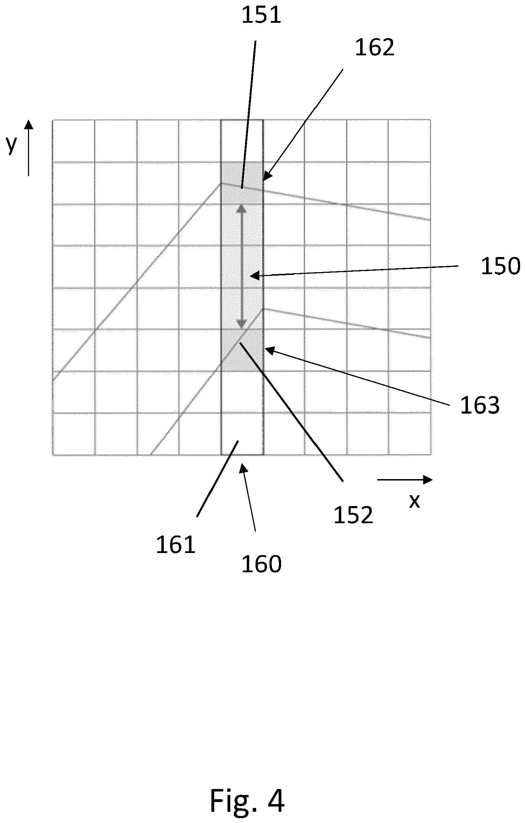

Since the change in signed area behaves linearly between the top and bottom pixels, instead of performing the approximation for each pixel, also a linear interpolation can be applied for the remaining pixels as illustrated by Fig. 4, which maps very well to hardware-accelerated fragment generation on a GPU. Further, a dedicated hardware such as an FPGA that performs the approximation itself can be envisioned.

Thus, using interpolation, a signed area of the topmost pixel 162 below the upper edge 151 of the line segment 150 is determined, and a signed area of the bottommost pixel 163 below the upper edge 151 is determined. Given the linear behavior of the signed area below the upper edge 151 between the topmost pixel 162 and the bottommost pixel 163, the signed area of the pixels in-between the topmost pixel and the bottommost pixel can be linearly interpolated. Clamping of the area is performed after the interpolation. The corresponding steps are performed for the lower edge 152. Subtracting the area below the lower edge from the area below the upper edge for each pixel 161 intersected by the line segment results in the area coverage of each pixel 161. Thus, a coloring can be assigned to the respective pixel based on the determined area coverage.

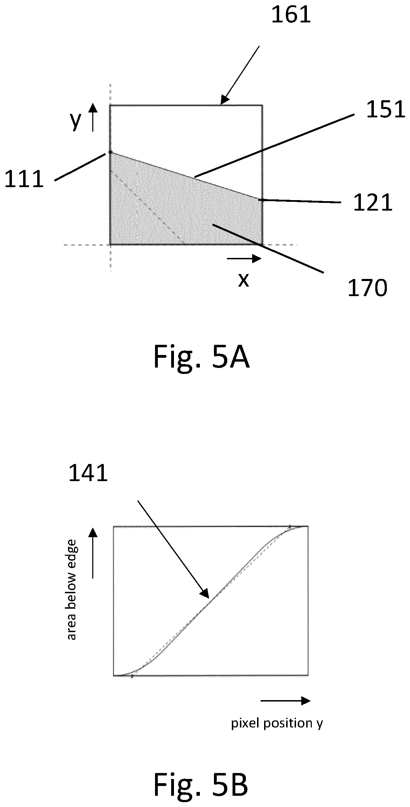

The approximation of an exponential function with a linear function as depicted in Fig. 3B may introduce a loss in accuracy. While the default placement of the linear function already gives fully adequate visual results, this can optionally be improved by finding a linear function that better fits the target function. Essentially, the goal is to minimize the area between the target function and the approximation function. One variant may be to add a slope-dependent offset to the origin of the line as well as its intersection with the next pixel border, which Figs. 5A and 5B illustrate. But since there is no linear relation between the slope and the optimal offset to reduce the maximum or the average error, a lookup table-based approach may also be applied. Both variants can be implemented with minimal overhead in practice, but the feature is still regarded as optional due to the already strong visual quality of the base version without error correction. Ultimately, to reduce the error further, each half of the graph would need to be approximated with an individual line that has the same slope than the line of the base version. However, the performance overhead does not justify the negligible quality gain. Taking a step back, the filtering may also introduce some inaccuracy as it summarizes potentially multiple measurement samples within a vertical column of pixels into a single pair of output values. Nevertheless, this occurs at the sub-pixel level, and the effect has no considerable impact on the end result.

Since the line thickness calculation is already resolved in the filtering step, the visual output for any vertical column of pixels has no interdependency with any other column. Thus, multiple columns of pixels can be drawn in parallel, e.g., using a shared input buffer. Further, each pixel within a column of pixels can be processed in parallel. The pixels 160 share the same wave geometry input and only differ in their sampling position. Data-wise, the only dependency is having access to the buffer entry for the previous column of pixels, which is naturally the case when using a shared ring buffer to manage the input data. Consequently, the proposed method maps very well to SIMD processing and particularly GPU hardware-acceleration.

Since no future vertical column of pixels influences any previously drawn columns, a strategy can be employed that reuses a rendering buffer by progressively adding new parts to a wave already within that buffer. The approach maps perfectly to the standard eraser-based wave rendering, where usually small incremental updates extend an otherwise visually static part. The strategy has substantial performance advantages over redrawing the entire wave after each update, which is especially crucial if updates arrive in real-time and drawing occurs on the CPU.

In contrast, other methods that operate on horizontal rows of pixels can introduce overlap between separately drawn line parts, which can lead to noticeable visual artifacts. Without substantial additional effort, there is no way to hide the artifacts or even guarantee a blending with correct results. The waveforms rendered in a production system are mostly dynamic and update according to incoming live data, usually at real-time frame rates. This is an important characteristic and also challenge, especially if networking and filtering run asynchronously to the drawing, which is the common case with the former running on the CPU and the latter on the GPU. In such a setup, a common pitfall that can stall the execution pipeline is resource contention with the CPU side attempting to update the input ring buffer, usually a GPU-side texture, and issue the next draw command while a previous command is still active or pending accessing the buffer.

A common method to tackle the issue is multi-buffering, where instead of waiting for a drawing operation to complete before updating a buffer, another buffer is used for the next operation. But this approach is less feasible when redrawing a wave fully each frame as each operation needs access to the entire wave data, thus requiring either copying to keep each buffer up to date or drawing a wave in multiple operations according to multiple buffers. However, given that per-frame updates are usually of limited size, a ring buffer of adequate size can be used to draw a wave in at most two operations without a collision between the updated part and parts still being used in previous operations. Consequently, synchronization efforts can be skipped, either via DMA (Direct Memory Access) or a graphics API that allows such functionality. Uncommon larger updates that would still cause a collision can be detected and conditionally use synchronization, e.g., via explicit fencing features of the graphics API.

When drawing waves progressively, multi-buffering becomes a more viable option, inducing only small overhead due to redundantly copying the data for the last vertical column of pixels of the previous drawing operation. However, given the aforementioned ring buffer setup and update characteristics, an update overwriting part of the buffer that is still in use is an even more remote case because each operation only draws part of the wave. The progressive wave rendering is thus ideally suitable for DMA usage. Shared memory between CPU and GPU is especially common on embedded systems including devices such as the iMX 8M Plus.

In summary, the proposed method maps very well to the wave data flow requirements and facilitates smooth, high throughput multi-process rendering mostly free of resource access synchronization overhead.

To fully utilize a state-of-the-art rendering pipeline, CPU, GPU, and display engine must work in parallel. Therefore, a common setup rotates between at least three rendering buffers so that while one buffer is currently on the display, the GPU can render the next one while the CPU already issues the drawing commands for the third one. Even in a setup that favors low latency to display a buffer over throughput, at least two buffers are needed to avoid either delay or visual glitches due to overwriting a buffer on display.

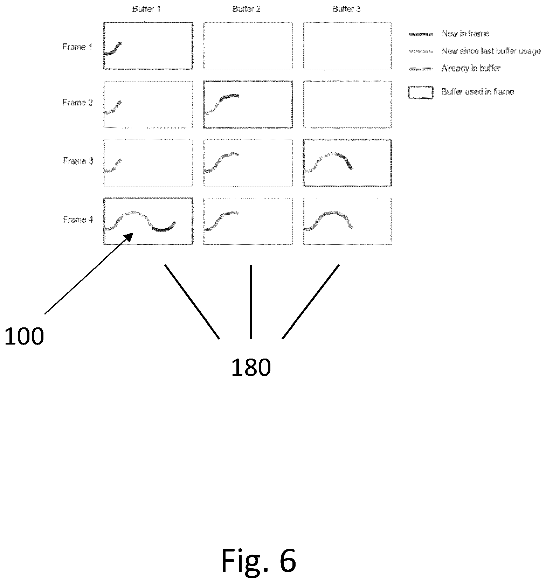

Drawing waves progressively requires explicit control over the rendering buffers to reliably track the content of each buffer and update it incrementally accordingly. However, some graphics drivers hide the details of buffer management, and the state of a buffer used in a particular frame may not be known. In this case, waves need to be fully redrawn for each frame, which is still done fast with the proposed optimized procedure. Nevertheless, a modern graphics stack like DRM/KMS provides the required means to explicitly control rendering buffers. Given a number of rendering buffers that are rotated between when rendering frames, for each buffer, the wave updates are tracked that occurred since the buffer was last used. The other buffers used in the meantime reflect these updates. Consequently, as illustrated in Fig. 6, to bring the buffer 180 up to date, the vertical columns of pixels 100 already added to other buffers in previous frames are redrawn and the columns that are new in the current frame are added. Depending on the number of buffers and the size of updates, the portion to redraw may induce variable overhead, which however is negligible for the common use case compared to the benefit of a highly parallelized rendering pipeline.

The focus so far was on the integration of the progressive rendering method as a standalone application that directly presents buffers to the display. However, the proposed approach also integrates well with a compositor that manages the display. The prerequisite is that the compositor supports updating its buffers progressively, and the simple copy and blend operations a compositor performs in its core are ideally suitable to implement such functionality. The small incremental wave changes that occur per frame can be communicated to the compositor, which transports them from the client buffers to its own buffers with minimal work accordingly.

In a setup that does not display the buffers directly, but passes them to a compositor managing separate buffers for display, the cross-buffer tracking mechanism may be skipped by guaranteeing that the compositor does not sample a portion of a buffer that overlaps with the line but does not contain or only partially contains the line.

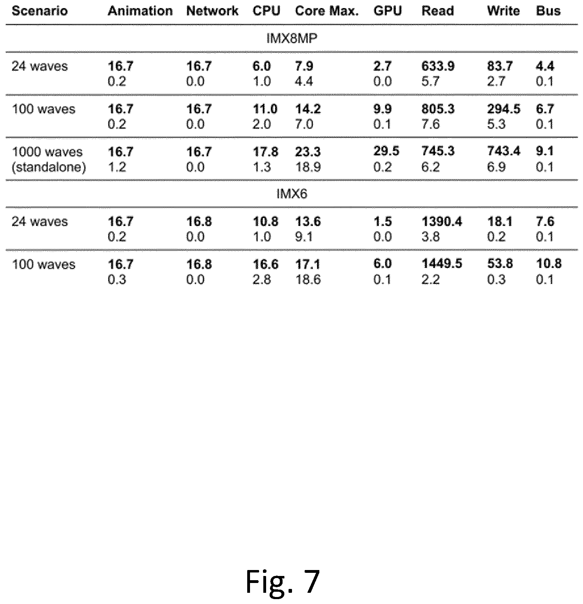

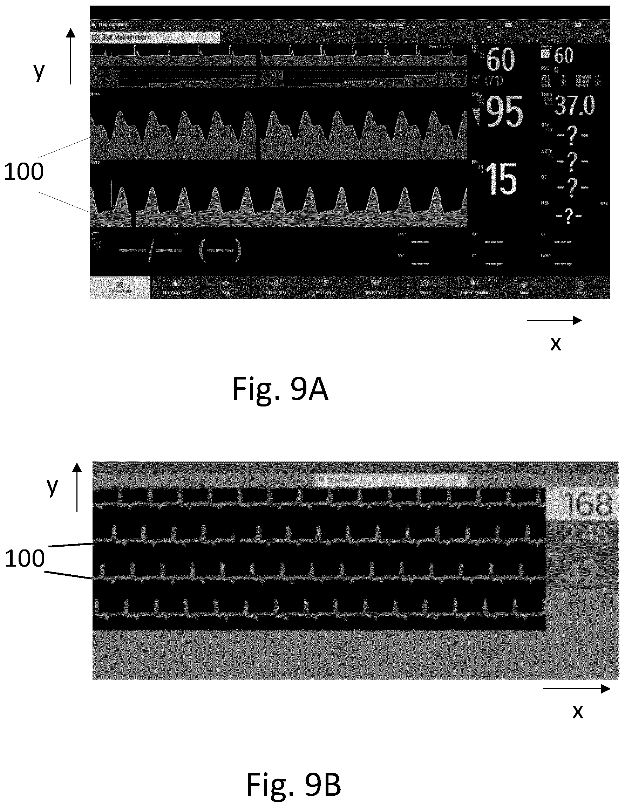

While the proposed solution is ideally suitable for progressive rendering, incrementally drawing or partially redrawing other types of content might be less feasible. However, blending waves with such content can be a common requirement of a user interface, which Figs. 9A and 9B illustrate. Using a depth buffer or clipping can speed up redrawing portions of content and enable to maintain progressive wave drawing. A more general solution is rendering to different layers and mixing those layers in a compositing step. Some display engines, including on platforms like the IMX6, provide multiple hardware layers or planes, which is an ideal fit in this situation. The alternative are software layers, but at the cost of some compositing overhead. Nevertheless, as already stated, the proposed method can also efficiently work with a compositor, which the performance results in Fig. 7 demonstrate.

The proposed wave rendering system according to embodiments of this invention achieves significant performance enhancement. Fig. 7 shows a selection of measurement results on two major platforms. Essentially, numerous waves can be displayed even on devices with limited processing capability while maintaining stable 60 frames per second and only occupying a fraction of the system resources, as exemplarily shown in Fig. 7. Due to the progressive nature of both the filtering and the drawing step, the method also performs exceedingly well without a GPU, which is underlined with an implementation running inside the browser.

The standalone run renders only waves directly to the display, whereas the other runs blend waves with an exemplary web user interface rendered separately in another layer. Figs. 9A and 9B depict this setup. The system compositor takes care to mix the two content layers, on iMX 6 using a hardware overlay plane and on iMX 8M Plus in software using the GPU.

The animation and network measurements denote the speed of the rendering and filtering pipeline in milliseconds respectively, with 60 FPS being the target rate. All values are averages across a run, and the second number is the standard deviation. CPU, GPU, and bus load are percentage values. Fig. 7 also shows the maximum CPU load on a single core as a percentage value. Memory read and write are MB/s values, with the display engine consuming around 500 MB/s on iMX 8M Plus and 1000 MB/s on iMX 6 as a baseline to scan out the hardware planes.

The following transformations do not require refiltering of a wave and are thus especially fast on a GPU. The method allows a rotational transformation in 90-degree steps, which requires minor adaptions when drawing on the CPU, but is especially straight forward when the GPU performs the operation. Likewise, horizontally or vertically flipping a wave is a straightforward process. Further, by simply applying offsets to the X position of vertical columns of pixels or the Y position of positional values within the input buffer, a wave can be translated or duplicated anywhere on the screen. In case of the Y-axis, this is also possible on a sub-pixel level straight forwardly. However, the proposed method can also be adapted and extended to support horizontal sub-pixel movement.

So far, the focus was on eraser-based wave rendering, which is the standard and most common use case. However, another relevant use case are waves that continuously move across the screen, also called moving trace. Here, new data usually comes in at one end of the channel and eventually disappears at the other. Consequently, the progressive rendering method cannot be used, which relies on large parts of a wave remaining static, and instead the wave must be fully redrawn each frame. As already outlined, this is still a very fast process, especially using the GPU. Further, depending on the speed, waves may move a non-integer number of pixels per frame, and consequently, to avoid bumpy visuals, it is required to translate waves on the X-axis at sub-pixel accuracy.

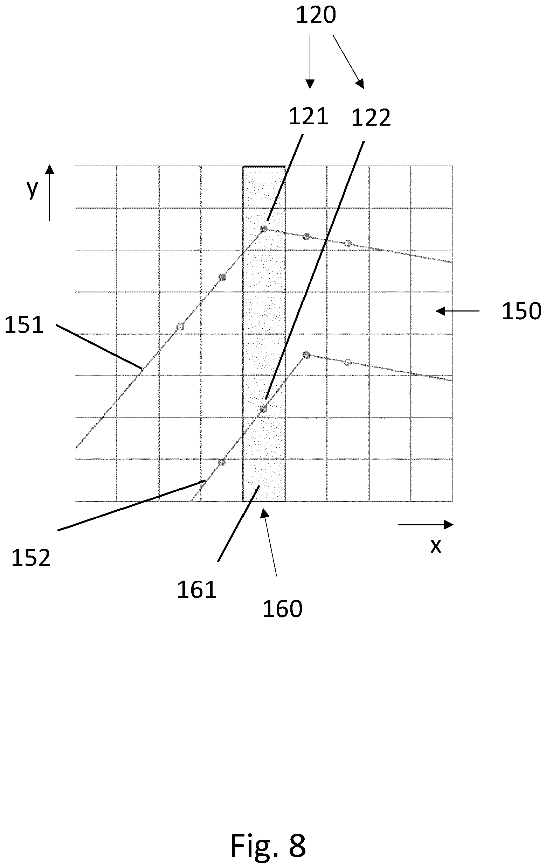

This embodiment describes the support for moving waves. Instead of placing the positional Y-axis values at the right border of the corresponding vertical column of pixels, the placement can be generalized to any position within the column, which Fig. 8 demonstrates.

Fig. 8 shows a line segment 150 comprising an upper edge 151 and a lower edge 152 intersecting a vertical column of pixels 160 with the received pair of points 120 now residing within the column of pixels.

As a result, the wave geometry that passes through the column of pixels now comprises two edges on both top and bottom. The left pair of edges is determined by linearly interpolating between the points of the previous column and the points of the column at the left border of the column of pixels. Likewise, the right pair of edges is determined by interpolating between the points of the column and the points of the next column at the right border of the column of pixels. The texture hardware unit of a GPU is ideally suitable to perform the interpolation. For each pair of edges, the method applies the steps described previously and combines the results proportionally to the sub-pixel X position of the points within the column of pixels, thus obtaining the final overlap of the wave geometry with each pixel. By dynamically shifting the position between frames, entirely smooth moving waves can be generated.

Rendering a vertical column of pixels now additionally depends on the subsequent column. To account for this, a negligible drawing delay of one column can be added, or the latest column can initially be drawn partially an be updated once the data for the subsequent column is available. Partial drawing is required either way to account for dropouts in the data. If a valid column of pixels borders an invalid column, there is simply only one pair of edges that constitutes the final overlap area.

Finally, a further modification of the method to an arbitrary number of input points per column can be envisioned, whereas the number as well as the placement of each point may even vary between columns. The actual practicability is limited though, as even though the approach would allow to very accurately model any underlying measurement sample distribution, the visual benefit is on the sub-pixel level and thus negligible in all relevant cases, while there is a considerable increase in complexity.

In practice, the data that the filtering processes, e.g., vital sign measurements, is usually received from an external device, and acquisition or network related data loss or delay is a possibility. Showing these dropouts clearly is a medically relevant feature. The proposed method inherently can display holes of deterministic size in a wave without line thickness dependent variation that might hide a dropout in the worst case. In contrast, drawing APIs such as canvas 2D in the browser require clipping or a post-process to achieve the effect.

Figs. 9A and 9B show examples of rendered filled waves and cascading waves. For a filled wave, the area below the wave within a channel is colored. The presented method can quickly and easily render filled waves, with the only required adaption being to overwrite the bottom Y position of a column of pixels with the bottom of the channel. To optimize for this specific wave type, the Y position for the lower wave edge can actually be dropped altogether from our input data and a constant be used instead. Additionally, straight forward adaptions allow to fill the area between the wave and any horizontal line. In contrast, drawing APIs such as canvas 2D in the browser require additional mechanisms such as rendering other shapes in combination with clipping to support the feature.

From filled waves, a step further is possible, and the method can be generalized to draw any convex shapes and certain concave shapes for which on the Y-axis, no lines exist that intersect the shape boundary at more than two points. Finally, cascading waves as shown in Fig. 9B go over the screen in several parts, usually to display an overall larger time frame. The proposed approach inherently supports this functionality whereas other methods require clipping or a post-process to achieve the effect accurately.

In the present case, waves are drawn in terms of vertical columns of pixels. However, mapping the underlying measurement samples to pixels according to the wave speed may result in a non-integer number of pixels that the wave moves per frame and thus also a varying amount of output columns per frame. This irregularity can impact the perceived fluency of eraser-based waves. To further improve the visual smoothness, the method may optionally overlay the columns of pixels bordering the eraser with a dimming or fade effect proportional to the sub-pixel position of the wave, effectively introducing a display delay of up to one column, which is however negligible. The effect can produce waves with improved fluency. However, this is deemed to be optional as the result is already adequate for most cases without it. Alternatively, intermediate, partial columns of pixels may be drawn, thus avoiding any delay.

Certain wave parameter changes can affect the filtering process, for example, speed, thickness, and a scaling transformation. If the changes should apply retrospectively, the entire visible part of a wave needs to be filtered, which can generate considerable CPU load depending on the number and size of waves. Refiltering every frame may thus not be feasible. However, changing the parameters in a repeated or even animated way, e.g., via a slider, is no common use case. Anyway, in contrast to other methods, the proposed method inherently enables changing the parameters or smoothly transitioning them to another value from any point forward without blending artifacts. The method does not support rotational transformations at any angle, which however is not a relevant requirement. Finally, rendering line forms with parts that stack above or below each other, like loops, is not straight forward and requires substantial adaptions. However, waves do not have such characteristics.

As conclusion, displaying medical information via waveforms is a prime aspect of a patient monitoring system, and the proposed solution gives a competitive edge in this area. The method can be deployed on essentially any computing device, enabling various wave drawing or related applications in established domains or future ventures like personal health. The solution proposed herein is advantageous for the specific wave use case, both in terms of visual quality and performance. The method can utilize hardware-acceleration and features of a modern graphics stack to provide high quality waves even on low end devices. The achieved efficacy may free resources for other applications and can reduce device operating cost and increase device longevity.

While there are other line drawing options that are adequate for the wave use case, the proposed solution provides significantly enhanced performance. This enables to put forth demanding wave applications at comparatively low resource cost and thus on devices with limited capability.

Wave visualization is an important component of many patient monitoring solutions, and the presented method thus applies to a wide range of existing and future products or applications on a wide range of platforms including embedded devices, desktop systems, browsers, and mobile devices. Further, the approach can be suitable for other, e.g., general line and to some degree shape rendering applications, also beyond the medical context.

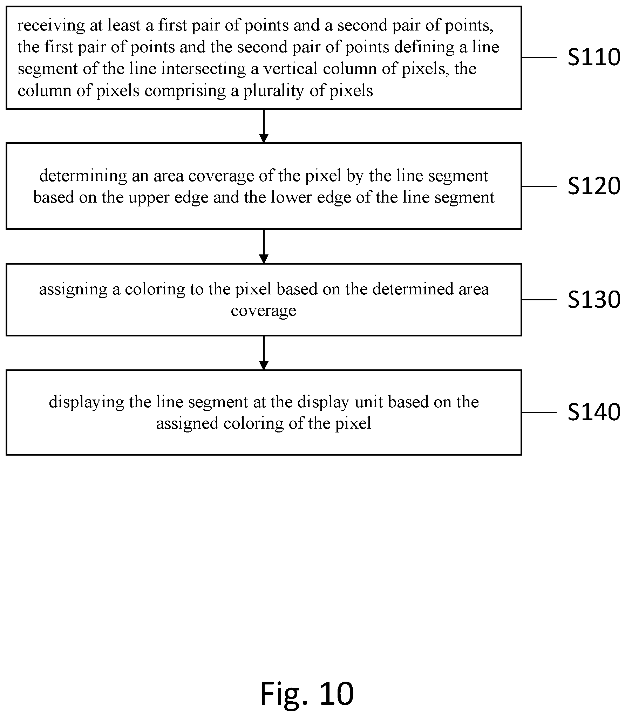

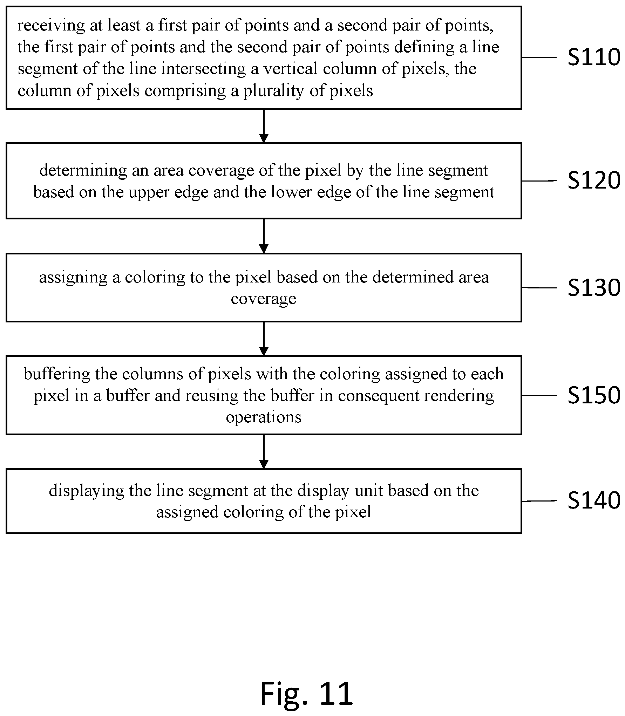

Figs. 10 and 11 show block diagrams of a method of rendering a line 100 at variable line thickness and displaying the line 100 on a display unit comprising a horizontal X-axis and a vertical Y-axis. The method comprises the step S 110 of receiving at least a first pair of points 110 and a second pair of points 120, the first pair of points 110 and the second pair of points 120 defining a line segment 150 of the line 100 intersecting a vertical column of pixels 160, the column of pixels 160 comprising a plurality of pixels 161. The first pair of points 110 comprises a first upper point 111 and a first lower point 112 in respect to the direction of the Y-axis, and the second pair of points 120 comprises a second upper point 121 and a second lower point 122 in respect to the direction of the Y-axis. The first upper point 111 and the second upper point 121 define an upper edge 151 of the line segment 150 intersecting the column of pixels 160, and the first lower point 112 and the second lower point 122 define a lower edge 152 of the line segment 150 intersecting the column of pixels 160. For at least one pixel 161in the plurality of pixels of the column of pixels 160, the method comprises further the step S120 of determining an area coverage 170 of the respective pixel 161 by the line segment 150 based on the upper edge 152 and the lower edge 152 of the line segment 150, and the step S130 of assigning a coloring to the respective pixel 161 based on the determined area coverage 170. As coloring, also shading of the pixel on a greyscale can be understood. The method comprises further the step S140 of displaying the line segment 150 at the display unit according to the assigned coloring of the respective pixel 161. In addition to that, Fig. 11 shows between steps S130 and S140 the optional step S150 of buffering the columns of pixels with the coloring assigned to each pixel in a buffer, and wherein the buffer is reused in each iteration and is updated with line segments corresponding to columns of pixels that are seamlessly integrated with line segments corresponding to columns of pixels that are already in the buffer, thus progressively advancing the line intersecting the plurality of columns of pixels.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

It is to be understood that any of the previous steps described in relation to embodiments and/or training steps described above can be performed by a specific-purpose computer system or general-purpose computer system, or a computer-readable medium, or data carrier system configured to carry out any of the steps described previously. The computer system can include a set of software instructions that can be executed to cause the computer system to perform any of the methods or computer-based functions disclosed herein. The computer system may operate as a standalone device or may be connected, for example using a network, to other computer systems or peripheral devices. In embodiments, a computer system performs logical processing based on digital signals received via an analogue-to-digital converter.

However, all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage devices. Portions of the present disclosure include processes and instructions that may be embodied in software, firmware, or hardware, and when embodied in software, may be downloaded to reside on and be operated from different platforms used by a variety of operating systems.

In a networked deployment, the computer system operates in the capacity of a server, or as a client user computer in a server-client user network environment, or as a peer computer system in a peer-to-peer or distributed network environment. The computer system can also be implemented as or incorporated into various devices, such as a server or another type of computer such as a workstation that includes a controller, a stationary computer, a mobile computer, a personal computer (PC), a laptop computer, a tablet computer, or any other machine capable of executing a set of software instructions sequentially or non-sequentially that specify actions to be taken by that machine. The computer system can be incorporated as an integrated system part of a larger system that includes additional devices. In an embodiment, the computer system can be implemented using electronic devices that provide voice, video, or data communication possibilities. Further, while the computer system is illustrated in the singular, the term "system" shall also be taken to include any collection of systems or sub-systems that individually or jointly execute a set or multiple sets, of software instructions to perform one or more computer functions.

The computer system may also include a processor. The processor executes instructions to implement some, or all aspects of methods and processes described herein. The processor is tangible and non-transitory. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The processor is an article of manufacture and/or a machine component. The processor is configured to execute software instructions to perform functions as described in the various embodiments herein. The processor may be a general-purpose processor or may be part of an application specific integrated circuit (ASIC). The processor may also be a microprocessor, a microcomputer, a processor chip, a controller, a microcontroller, a digital signal processor (DSP), a state machine, or a programmable logic device, a logical circuit, including a programmable gate array (PGA), such as a field programmable gate array (FPGA), or another type of circuit that includes discrete gate and/or transistor logic. The processor may be a central processing unit (CPU), a graphics processing unit (GPU), or both. Additionally, any processor described herein may include multiple processors, parallel processors, or both. Multiple processors may be included in, or coupled to, a single device or multiple devices. The processor can include one or more internal levels of cache, and a bus controller or bus interface unit to direct interaction with a bus. The term "processor" as used herein encompasses an electronic component able to execute a program or machine executable instruction. References to a computing device comprising "a processor" should be interpreted to include more than one processor or processing core, as in a multi-core processor. A processor may also refer to a collection of processors within a single computer system or distributed among multiple computer systems. The term computing device should also be interpreted to include a collection, or network, of computing devices each including a processor or processors. Programs have software instructions performed by one or multiple processors that may be within the same computing device or which may be distributed across multiple computing devices. Further, the software instructions, when executed by the processor, perform one or more steps of the methods and processes as described herein.

The computer system can further include a communications interface by way of which the computer system can connect to networks and receive data useful in executing the methods and system set out herein as well as transmitting information to other devices. The computer system further includes a video display unit as an output device by which information can be output, such as a liquid crystal display (LCD), an organic light emitting diode (OLED), a flat panel display, a solid-state display, or a cathode ray tube (CRT), for example. Additionally, the computer system includes an input device, such as a keyboard/virtual keyboard or touch-sensitive input screen or speech input with speech recognition, and a cursor control device, such as a mouse or touch-sensitive input screen or pad. The computer system also optionally includes a disk drive unit, a signal generation device, such as a speaker or remote control, and/or a network interface device.

The processes and displays presented herein are not inherently related to any particular computer or other apparatus. Various general-purpose systems may also be used with programs in accordance with the teachings herein, or it may prove convenient to construct more specialized apparatus to perform one or more method steps. The structure for a variety of these systems is discussed in the description below. In addition, any programming language that is sufficient for achieving the techniques and implementations of the present disclosure may be used. In addition, the language used in the specification has been principally selected for readability and instructional purposes and may not have been selected to delineate or circumscribe the disclosed subject matter. Accordingly, the present disclosure is intended to be illustrative, and not limiting, of the scope of the concepts discussed herein.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

The illustrations of the embodiments described herein are intended to provide a general understanding of the structure of the various embodiments. The illustrations are not intended to fully describe all the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

### LIST OF REFERENCE SIGNS:

- 100: line
- 110: first pair of points
- 111: first upper point
- 112: first lower point
- 120: second pair of points
- 121: second upper point
- 122: second lower point
- 141: area function
- 150: line segment
- 151: upper edge
- 152: lower edge
- 160: vertical column of pixels
- 161: pixel
- 162: topmost pixel
- 163: bottommost pixel
- 170: area coverage
- 180: rendering buffer

## Claims

1. A computer-implemented method of rendering a line (100) at variable line thickness and displaying the line (100) on a display unit comprising a horizontal X-axis and a vertical Y-axis, comprising:
receiving (S110) at least a first pair of points (110) and a second pair of points (120), the first pair of points (110) and the second pair of points (120) defining a line segment (150) of the line (100) intersecting a vertical column of pixels (160), the column of pixels (160) comprising a plurality of pixels (161);
wherein the first pair of points (110) comprises a first upper point (111) and a first lower point (112) in respect to the direction of the Y-axis, and the second pair of points (120) comprises a second upper point (121) and a second lower point (122) in respect to the direction of the Y-axis;
wherein the first upper point (111) and the second upper point (121) define an upper edge (151) of the line segment (150) intersecting the column of pixels (160);
wherein the first lower point (112) and the second lower point (122) define a lower edge (152) of the line segment (150) intersecting the column of pixels (160); and
for at least one pixel (161) in the plurality of pixels of the column of pixels (160):
determining (S120) an area coverage (170) of the pixel (161) by the line segment (150) based on the upper edge (152) and the lower edge (152) of the line segment (150);
assigning (S130) a coloring to the pixel (161) based on the determined area coverage (170);
displaying (S140) the line segment (150) at the display unit according to the assigned coloring of the pixel (161).

2. The method according to claim 1, wherein determining the area coverage (170) of the respective pixel (161) by the line segment (150) comprises determining a first area of the pixel (161) below the upper edge (151) and a second area of the pixel below the lower edge (152), and subtracting the second area from the first area, thereby determining the area coverage (170).

3. The method according to claim 2, wherein determining the first area of the pixel (161) below the upper edge (151) comprises sampling a first area function (141) mapping a pixel position varying at sub-pixel accuracy within the column of pixels (160) to a respective approximated area below the upper edge (151), and/or wherein determining the second area of the pixel below the lower edge comprises sampling a second area function (141) mapping a pixel position varying at sub-pixel accuracy within the column of pixels (160) to a respective approximated area below the lower edge.

4. The method according to claim 3, wherein the first area function (141) and/or the second area function (141) correlating the pixel position within the column of pixels (160) to the respective area below the upper edge (151) and/or the lower edge (152), respectively, is a linear function clamped between zero and at most the full area of a pixel.

5. The method according to any one of the preceding claims, wherein the method is performed for each pixel (161) of the plurality of pixels that is intersected by the line segment (150).

6. The method according to any one of claims 1 to 4, wherein the method is performed for a topmost pixel (162) and a bottommost pixel (163) of the plurality of pixels (161) that are intersected by the line segment (150), and wherein the first area of the pixel below the upper edge (151) and/or the second area of the pixel below the lower edge (152) for the plurality of pixels that are located in-between the topmost pixel (162) and the bottommost pixel (163) are determined by interpolation.

7. The method according to any of the preceding claims, wherein determining the area coverage (170) of the pixel (161) comprises setting the area coverage to at most the area of a pixel if the pixel is both fully below the upper edge (151) and fully above the lower edge (152).

8. The method according to any one of the preceding claims, further comprising receiving a third pair of points;
wherein the second pair of points (120) is located within the column of pixels (160), the first pair of points (110) is located previous to the column of pixels, and the third pair of points is located subsequent to the column of pixels;
wherein the second pair of points (120) and the third pair of points define a second line segment intersecting the vertical column of pixels (160);
wherein determining an area coverage (170) of the pixel (161) comprises determining a first sub-pixel area coverage of the pixel for the first line segment and a second sub-pixel area coverage of the pixel for the second line segment, and incorporating the determined first and second sub-pixel area coverages into the area coverage (170) of the pixel (161) proportionally to the sub-pixel location of the second pair of points (120) within the vertical column of pixels (160).

9. The method according to claim 8, wherein a plurality of pairs of points is received within each column of pixels, and wherein each resulting line segment within the column of pixels (160) or intersecting the column of pixels (160) contributes proportionally to the area coverage (170) of the pixel (161).

10. The method according to any one of the preceding claims, wherein the line (100) intersects a plurality of vertical columns of pixels, and wherein the method is repeated for every column of pixels (160) of the plurality of columns of pixels.

11. The method according to claim 10, wherein drawing the plurality of columns of pixels or the individual pixels within each column of pixels (160) is performed on a step-by-step basis across several iterations, wherein the method further comprises:
buffering (S150) the columns of pixels with the coloring assigned to each pixel (161) in a buffer (180), and wherein the buffer is reused in each iteration and is updated with line segments corresponding to columns of pixels that are seamlessly integrated with line segments corresponding to columns of pixels that are already in the buffer, thus progressively advancing the line (100) intersecting the plurality of columns of pixels.

12. The method according to claim 11, wherein a plurality of buffers (180) is used, wherein the method further comprises:
for each buffer (180) of the plurality of buffers, tracking the vertical columns of pixels buffered to any other one of the plurality of buffers since the respective buffer was last used;
for each iteration, bringing the current buffer (180) used in this iteration up to date by drawing the columns of pixels tracked for that buffer; and
for each iteration, updating the current buffer (180) with new columns of pixels if new columns of pixels exist for the current iteration.

13. A data processing apparatus for carrying out the steps of the method according to any one of claims 1 to 12.

14. A computer program comprising instructions which, when the program is executed by a computer, cause the computer to carry out the steps of the method according to any one of claims 1 to 12.
